# EUROPÄISCHE PATENTSCHRIFT

(11) **EP 2 316 674 B1**
(45) Veröffentlichungstag und Bekanntmachung des Hinweises auf die Patenterteilung: **20.05.2015**
(21) Anmeldenummer: 10188462.5
(22) Anmeldetag: 22.10.2010
(51) Int. Cl.: B60H 1/00, B60H 1/32

(54) **Verdampfermodul**
Evaporator module
Module d'évaporateur

(30) Priorität: 27.10.2009 DE 102009050886
(43) Veröffentlichungstag der Anmeldung: 04.05.2011
(73) Patentinhaber: MAHLE Behr GmbH & Co. KG, 70469 Stuttgart (DE)
(72) Erfinder: Ott, Franz, 70499 Stuttgart (DE); Feuerecker, Günther, 70567 Stuttgart (DE)
(74) Vertreter: Grauel, Andreas

(56) Entgegenhaltungen:
- EP-A2- 2 050 601
- WO-A1-2008/105391
- DE-A1-102005 021 396
- DE-A1-102006 044 922
- US-A1- 2006 254 308

## Beschreibung

Die Erfindung betrifft ein Verdampfermodul, insbesondere für einen Kältemittelkreislauf einer Klimaanlage eines Kraftfahrzeugs, nach dem Oberbegriff des Anspruchs 1.

Die DE 10 2005 021 396 A1 (siehe Fig.1) beschreibt einen Kältemittelkreislauf 1 mit einem ersten 5 und einem zweiten Verdampfer 8 und einem Ejektor 4. Eine derartige Vorrichtung weist zudem einen Verdichter 2 auf, welcher ein Kältemittel von einem expandierten in einen komprimierten Zustand überführt. Dem Verdichter nachgeschaltet ist ein Kondensator 3, der die bei der Kompression des Kältemittels erzeugte Wärme an die Umgebung abführt. Dem Wärmeübertrager folgt abströmseitig ein als Ejektor 4 ausgebildetes Expansionselement. Der Ejektor besitzt einen als Düsenglied ausgeformten ersten Eingang 4a für ein Kältemittel, in der das Kältemittel zunächst in einem stark gerichteten Strahl entspannt und beschleunigt wird. Nachfolgend mischt sich dieser Strahl mit Kältemittel aus einem in einen zweiten Eingang 4b in den Ejektor mündenden Zweiges eines ersten Verdampfers 5. Der zweite Eingang 4b ist hierbei in einem Mantelglied 4c angeordnet.

Bei dem Ansaugen des Kältemittels aus dem zweiten Eingang 4b wird mechanische Arbeit des gerichteten schnellen Strahls des Düsenglieds beziehungsweise des ersten Eingangs 4a genutzt. Die Vermischung der beiden Strahlen im Mischrohr 12 und die anschließende Expansion des gerichteten gemischten Strahls in einem Diffusor 6 des Ejektors 4 führen zu einem Druckanstieg des Gemisches. Dieses Gemisch enthält flüssige und gasförmige Phasen des Kältemittels. Nach dem Verlassen des Ejektors tritt das Kältemittel in ein Trennelement 7 ein. Hierbei wird der erste Verdampfer 5 mit einem Teil des in das Trennelement 7 eintretenden Kältemittels beschickt. Der restliche Anteil wird einem zweiten Verdampfer 8 zugeführt. Dort wird durch Verdampfung der flüssigen Anteile und entsprechendem Wärmeaustausch mit zu klimatisierender Luft eine Kühlleistung des Gesamtsystems erzeugt. Je nach Gestaltung des Trennelementes kann der Anteil flüssigen Kältemittels in den beiden Teilströmen gleich oder auch unterschiedlich sein, wobei eine Anreicherung der flüssigen Phase des Teilstroms zum ersten Verdampfer 5 vorteilhaft ist. Dem zweiten Verdampfer 8 ist ein Niederdrucksammler 10 nachgeordnet, dem wiederum die Saugseite des Verdichters 2 folgt. Zuströmseitig des ersten Verdampfers 5 ist ein Expansionsorgan 9 angeordnet, in dem das Kältemittel auf einen niedrigen Verdampfungsdruck entspannt wird.

Dokument WO-A-2008/105391 offenbart ein Verdampfermodul gemäss dem Oberbegriff des Anspruchs 1.

Es ist Aufgabe der Erfindung, ein Verdampfermodul bereitzustellen, das bezüglich dieses Standes der Technik, aus weniger Einzelteilen besteht und somit kostengünstiger hergestellt werden kann.

Diese Aufgabe wird gelöst durch ein Verdampfermodul mit den Merkmalen des Anspruchs 1. Vorteilhafte Ausgestaltungen sind Gegenstand der Unteransprüche.

In einem Grundgedanken der Erfindung weist ein Verdampfermodul einen ersten Verdampfer und mindestens einen zweiten Verdampfer und einen Ejektor mit einem Düsenglied und einem Mantelglied auf, wobei der Ejektor einen ersten Eingang und zumindest einen, zweiten Eingang zur Zuführung von Kältemittel aufweist, wobei der Ejektor einen gemeinsamen Ausgang zum Auslass eines Kältemitteigenlisches der beiden Eingänge aufweist, wobei zumindest ein Teil des aus dem Ausgang ausgelassenen Kältemittels dem ersten Verdampfer zuführbar ist und wobei das den ersten Verdampfer verlassende Kältemittel zumindest teilweise dem zweiten Eingang des Ejektors zuführbar ist und wobei zumindest ein Teil des aus dem Ausgang ausgelassenen Kältemittels dem zweiten Verdampfer zuführbar ist, wobei die Zuführung des Kältemittelgemisches in den ersten und zweiten Verdampfer im Mantelglied ausgebildet ist.

Durch die Ausbildung der Kältemittelzuführung in den ersten und zweiten Verdampfer im Mantelglied kann auf zusätzliche Rohre verzichtet werden und somit insgesamt Bauraum eingespart werden.

In einer bevorzugten Ausführungsform ist das Düsenglied mittels eines das Mantelglied abschließenden Deckelteils gegenüber dem Mantelglied gehalten.

In einer weiteren bevorzugten Ausführungsform sind das Düsenglied und/oder das Mantelglied und/oder der Deckelteil als Umformteil ausgebildet.

In bevorzugter nicht notwendiger Detailgestaltung ist das Düsenglied dabei aus einem Rohrteil ausgebildet, insbesondere auf einfache Weise durch Stauchung und/oder Aufweitung. Die regelmäßig sehr genau einzuhaltenden Maße der Innenkontur des Düsenglieds können dabei z. B. durch einen Anlegedorn gewährleistet werden. Ein solches Düsenglied kann insbesondere vollständig ohne urgeformte Teile durch Umformung aus Halbzeugen hergestellt werden.

In einer weiteren bevorzugten Ausführungsform ist das Mantelglied als Umformteil hergestellt. In bevorzugter Detailgestaltung erfolgt die Herstellung durch Fließpressen und/oder Aufweitung aus einem Rohrteil. Insbesondere bevorzugt kann dabei auf urgeformte Teile des Mantelglieds verzichtet werden, so dass das Mantelglied vollständig durch Umformung aus einem Halbzeug herstellbar ist.

In einer weiteren bevorzugten Ausführungsform ist das Deckelteil dabei ebenfalls als Umformteil, insbesondere als Stanzteil aus lotplattiertem Blech ausgebildet.

Grundsätzlich ist es im Sinne der Erfindung nicht notwendig, dass Düsenglied und Mantelglied durch ein Deckelteil miteinander verbunden werden, da je nach gegebenen Materialstärken und gewünschter Dimensionierung auch denkbar ist, dass ein dem Deckteil ähnlicher Abschluss zum Beispiel durch Umformung unmittelbar an dem Mantelglied ausgebildet ist, wodurch insbesondere das Düsenglied unmittelbar mit dem Mantelglied verbunden sein kann.

In einer weiteren bevorzugten Ausführungsform ist der zweite Eingang des Ejektors im Mantelglied angeordnet. Somit kann der Deckelteil insgesamt kleiner ausgeführt werden und somit weiteres Material eingespart werden.

In einer weiteren bevorzugten Ausführungsform weist der erste und/oder zweite Verdampfer Sammelkästen auf, wobei die Zuführung des Kältemittelgemisches in die Sammelkästen erfolgt.

In einer weiteren bevorzugten Ausführungsform weisen die Sammelkästen eine Außenkontur auf, die im Wesentlichen dem Buchstaben "B" entspricht, wobei die Außenkontur des Mantelgliedes zumindest teilweise dieser Kontur angepasst ist. Durch eine derartige Kontur der Sammelkästen und des Mantelgliedes wird eine besonders gute Anlagefläche für eine stoffschlüssige Verbindung der beiden Sammelkästen mit dem Mantelglied, insbesondere an den Kältemitteldurchtritten zwischen Ejektor und Sammelkästen bereitgestellt.

Bevorzugt entspricht hierbei die Länge des Mantelgliedes im Wesentlichen der Länge der beiden Sammelkästen. Somit ist es möglich, das Mantelglied mit den Sammelkästen entlang der gesamten Länge miteinander stoffschlüssig zu verbinden.

Als stoffschlüssige Verbindung eignet sich insbesondere Löten oder Schweißen.

Alternativ ist es jedoch auch möglich, das Mantelglied mit den Sammelkästen nur an bestimmten Bereichen, bevorzugt an den Zuführungen zum ersten und zweiten Verdampfer und am zweiten Eingang zum Ejektor stoffschlüssig und druckdicht miteinander zu verbinden.

Bevorzugt kann ein derartiges Verdampfermodul in einem Kältemittelkreislauf, insbesondere für eine Klimaanlage eines Kraftfahrzeuges, aufweisend zumindest einen Verdichter und einen Kondensator, eingesetzt werden. Bevorzugt kann ein derartiger Kältemittelkreislauf auch einen Niederdrucksammler oder einen Hochdrucksammler mit entsprechender Überhitzungsregelung aufweisen,

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere wichtige Merkmale der vorliegenden Erfindung ergeben sich aus der nachfolgenden detaillierten Beschreibung in Verbindung mit den Ansprüchen und den Zeichnungen.

Nachfolgend werden bevorzugte Ausführungsbeispiele eines erfindungsgemäßen Verdampfermoduls beschrieben und anhand der anliegenden Zeichnungen näher erläutert.

Es zeigen:

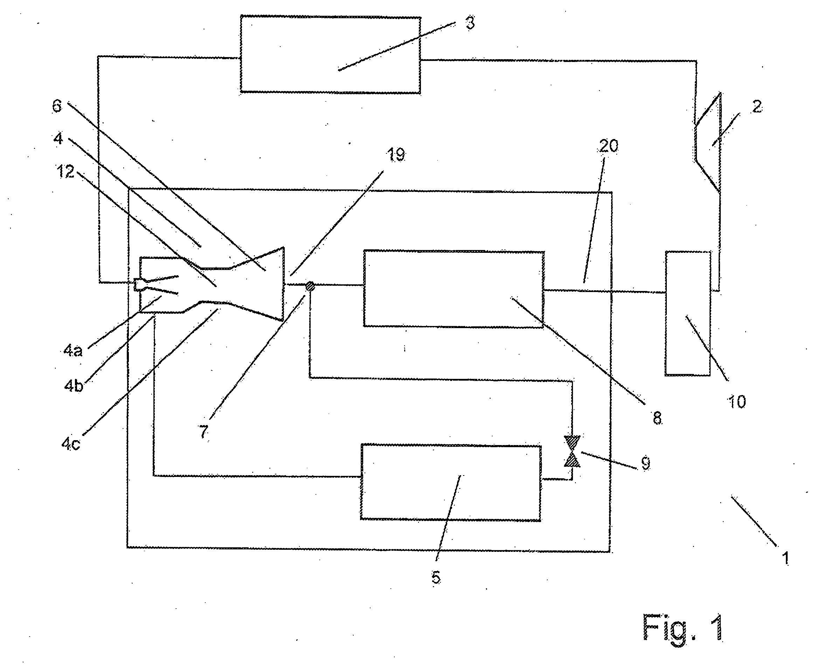

Fig. 1 ein Verdampfermodul in einem Kältemittelkreislauf nach dem stand der Technik;
Fig. 2; ein erfindungsgemäßes Verdampfermodul im Schnitt durch die Mittelebene des Verdampfers (Frontalansicht);
Fig. 3; ein erfindungsgemäßes Verdampfermodul in einer Seitenansicht;
Fig. 4; ein erfindungsgemäßes Verdampfermodul in einer Schnittansicht entlang der Linie A-A aus Fig. 3;
Fig. 5a und Fig. 5b; ein erfindungsgemäßes Verdampfermodul in einer schematischen Ansicht;

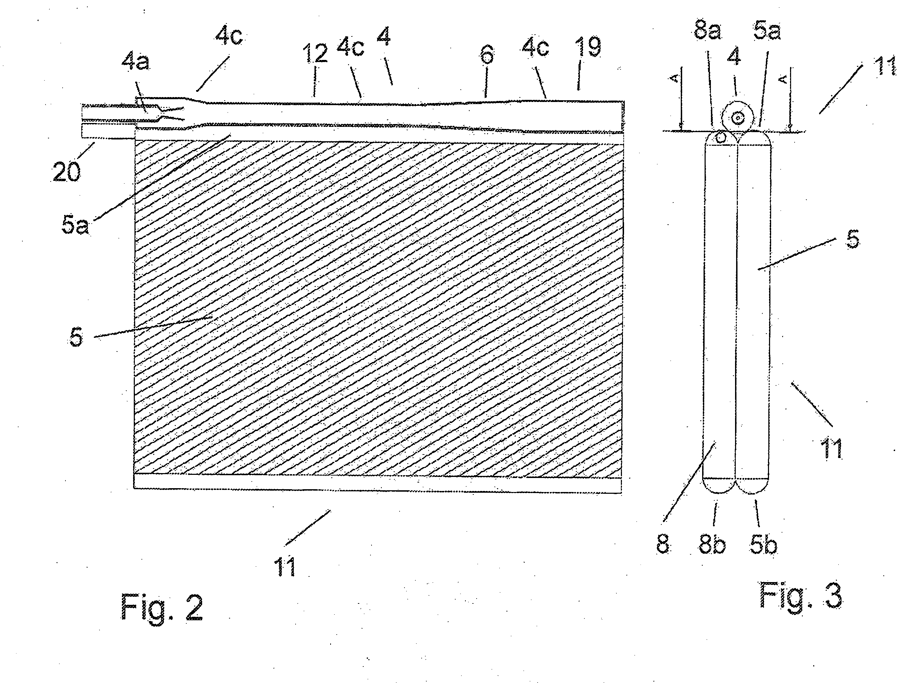

Die Fig. 2 und Fig. 3 zeigen eine Ausführungsform eines erfindungsgemäßen Verdampfermoduls in einer Frontansicht beziehungsweise Seitenansicht. Ein derartiges Verdampfermodul weist einen ersten Verdampfer 5 und einen zweiten Verdampfer 8 auf, die beispielsweise aus einer Vielzahl von Flachrohren rohren mit dazwischen angeordneten Wellrippen bestehen und fest miteinander verlötet sind. Am oberen Ende der beiden Verdampfer sind jeweils Sammelkästen 5a und 8a angeordnet, so dass ein Kältemittel, auf die einzelnen Flachrohre verteilt, beziehungsweise von diesen wieder gesammelt werden kann. Die beiden Sammelkästen weisen eine Außenkontur auf, die im Wesentlichen dem Buchstaben "B" entspricht. Zwischen den beiden Sammelkästen ist ein Ejektor 4 angeordnet, wie dies insbesondere den Figuren 2, 3 und 5a und 5b zu entnehmen ist.

Der prinzipielle Aufbau einer derartigen Vorrichtung und der entsprechende Kältemittelverlauf wird in den Anmeldungen DE 10 2005 021 396 A1 beziehungsweise DE 10 2008 051 892 A1 beschrieben, deren Offenbarungsgehalt ausnahmslos in diese Anmeldung aufgenommen werden soll.

Demzufolge eignet sich ein erfindungsgemäßes Verdampfermodul 11 für den Einsatz in einem Kältemittelkreislauf einer Klimaanlage eines Kraftfahrzeuges.

Ein derartiger Kältemittelkreislauf weist im Wesentlichen einen Verdichter, einen Kondensator oder einen Gaskühler und ein erfindungsgemäßes Verdampfermodul auf. Unter Umständen kann der Kreislauf noch durch weitere Komponenten, wie einen Niederdrucksammler und/oder einen inneren Wärmeübertrager ergänzt werden.

Der Ejektor 4 weist ein Düsenglied 4a auf, das einen Zuleitungsabschnitt von konstantem Durchmesser, einen ersten Düsenabschnitt von sich in Strömungsrichtung des Kältemittels konisch verjüngendem Durchmesser, eine Engstelle von minimalem Durchmesser und einen nachfolgenden zweiten Düsenabschnitt von sich konisch in Strömungsrichtung erweiterndem Durchmesser umfasst.

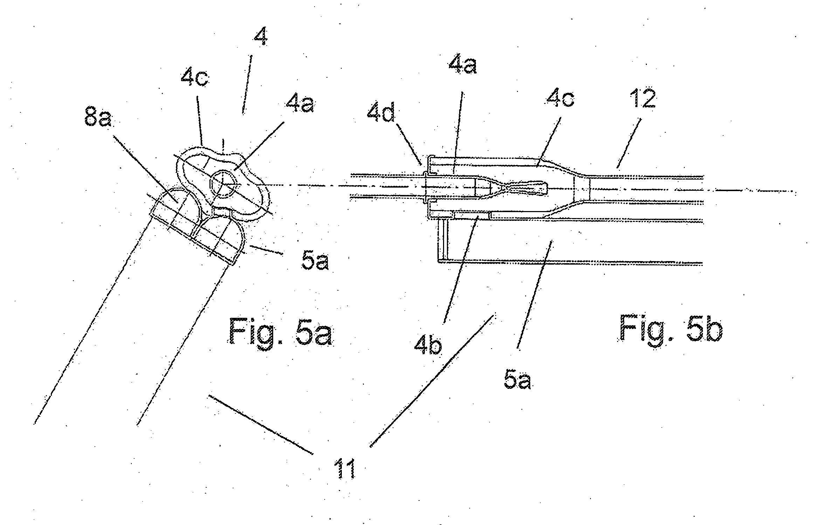

Das Düsenglied 4a ragt in das Mantelglied 4c hinein und wird gegenüber dem Mantelglied mittels eines Deckelteils 4d gehalten, wie dies den Fig. 5a und Fig. 5b zu entnehmen ist.

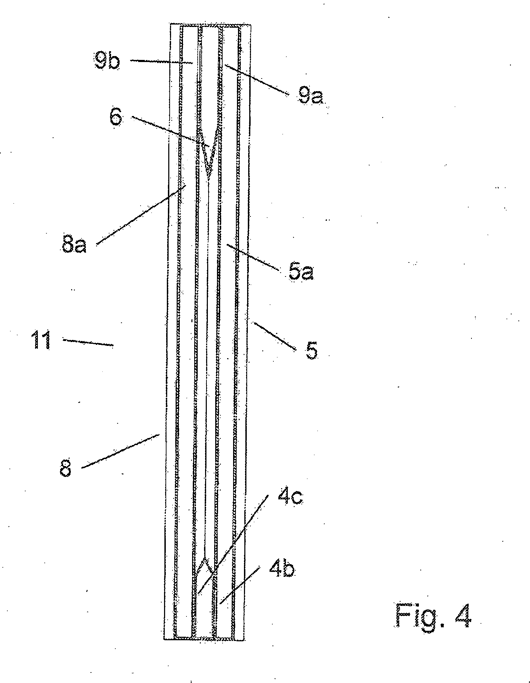

Das Mantelglied 4c weist im Wesentlichen die gleiche Länge wie die beiden Sammelkästen 5a und 8a auf. Das Mantelglied weist, wie aus Fig. 4 ersichtlich, drei Öffnungen 4b, 9a und 9b auf, die an unterschiedlichen Enden des Mantelgliedes ausgebildet sind. Das Mantelglied kann, wie in Fig. 4 gezeigt, an den beiden Enden mit den Sammelkästen 5a und 8a verlötet sein, wobei die Lötung die Durchtritte 4b, 9a und 9b einschließt und nach außen äbdichtet. Durch entsprechende Formung der Sammelkästen ist es auch möglich, eine durchgehende Anlage des Ejektors mit den Sammelkästen 5a und 8a und somit eine durchgängige Verlötung zu ermöglichen.

Das Kältemittel, das in einen ersten Eingang 4a strömt, wird zunächst in einem stark gerichteten Strahl entspannt und beschleunigt. Nachfolgend mischt sich dieser Strahl mit Kältemittel aus einem in einen zweiten Eingang 4b in den Ejektor mündenden Zweiges eines ersten Verdampfers 5. Der zweite Eingang 4b ist hierbei in dem Mantelglied 4c angeordnet, wie dies der Fig. 5b zu entnehmen ist.

Bei dem Ansaugen des Kältemittels aus dem zweiten Eingang 4b wird mechanische Arbeit des gerichteten schnellen Strahls des Düsenglieds beziehungsweise des ersten Eingangs 4a genutzt. Die Vermischung der beiden Strahlen im Mischrohr 12 und die anschließende Expansion des gerichteten gemischten Strahls im Diffusor 6 beziehungsweise in einem gemeinsamen Ausgang 19 des Ejektors 4 führen insgesamt zu einem Druckanstieg des Gemisches. Dieses Gemisch enthält flüssige und gasförmige Phase des Kältemittels.

Das Kältemittel wird nun über die Öffnung 9a dem Sammelkasten 5a beziehungsweise dem ersten Verdampfer 5 zugeführt. Der restliche Anteil wird über eine Öffnung 9b einem Sammelkasten 8a beziehungsweise einem zweiten Verdampfer 8 zugeführt. Dort wird durch Verdampfung der flüssigen Anteile und entsprechendem Wärmeaustausch mit zu klimatisierender Luft eine Kühlleistung des Gesamtsystems erzeugt.

Der erste Verdampfer 5 ist derart ausgeführt, dass das Kältemittel, das dem Verdampfer über die Öffnung 9a zugeführt wird, nach einer vollständigen Durchströmung dem zweiten Eingang des Ejektors 4b zugeführt werden kann. Beispielsweise weist der erste Verdampfer 5 hierzu zwei oder mehrere Fluten auf, die durch eine oder mehrere Trennwände im Sammelkasten 5a gebildet werden. Das Kältemittel strömt demnach vom Sammelkasten 5a durch einen Teil der Flachrohre (" 1. Flut ") in einen unteren Bereich des Verdampfes, wird dort in einem Sammler 5b umgelenkt und strömt durch den restlichen Teil der Flachrohre (" 2. Flut ") wieder in den Sammelkasten 5a, von wo es dem zweiten Eingang des Ejektors 4b zugeführt werden kann.

Analog hierzu wird der Kältemittelmassenstrom im Verdampfer 8 in den Sammelkästen 8a und 8b erteilt und umgelenkt.

Um eine kompakte Anordnung des Verdampfers zu ermöglichen, erhält der erste Verdampfer 5 eine gerade Anzahl von Fluten. Erhält der zweite Verdampfer 8 ebenfalls eine gerade Anzahl Fluten, dann ist ein kompakter Rohrverlauf möglich, da das Saugrohr 20 in der Nähe des ersten Eingangs 4a angeordnet sein kann.

Wie insbesondere der Fig. 4 entnommen werden kann, werden neben der Öffnung 4b auch die Öffnungen 9a und 9b im Mantelglied 4c ausgebildet, wobei die Öffnung 9a einen geringeren Durchmesser aufweist als die Öffnungen 9b. Durch den geringen Durchmesser 9a wird eine Drosselung des Kältemittels bereitgestellt, so dass auf ein weiteres Drosselelement verzichtet werden kann.

Insgesamt ergibt sich durch das erfindungsgemäße Verdampfermodul ein kompakter und damit baumraumsparender Aufbau gegenüber dem Stand der Technik, so dass Kosten und Herstellutigsaufwand reduziert werden können.

## Patentansprüche

1. Verdampfermodul (11), insbesondere für einen Kältemittelkreislauf (1) einer Klimaanlage eines Kraftfahrzeugs, aufweisend einen ersten Verdampfer (5) und mindestens einen zweiten Verdampfer (8) und einen Ejektor (4) mit einem Düsenglied (4a) und einem Mantelglied (4c), wobei der Ejektor einen ersten Eingang (4a) und zumindest einen zweiten Eingang (4b) zur Zuführung von Kältemittel aufweist, wobei der Ejektor einen gemeinsamen Ausgang (19) zum Auslass eines Kältemittelgemisches der beiden Eingänge (4a, 4b) aufweist, wobei zumindest ein Teil des aus dem Ausgang (19) ausgelassenen Kältemittels dem ersten Verdampfer (5) zuführbar ist und wobei das den ersten Verdampfer verlassende Kältemittel zumindest teilweise dem zweiten Eingang (4b) des Ejektors (4) zuführbar ist und wobei zumindest ein Teil des aus dem Ausgang ausgelassenen Kältemittels dem zweiten Verdampfer (8) zuführbar ist, wobei eine Zuführung (9a, 9b) des Kältemittelgemisches in den ersten (5) und zweiten Verdampfer (8) im Mantelglied (4c) ausgebildet ist; wobei der erste und zweite Verdampfer Sammelkästen (5a, 8a) aufweisen und die Zuführung des Kältemittelgemisches in die Sammelkästen (5a, 8a) erfolgt und wobei weiterhin die Sammelkästen (5a, 8a) eine Außenkontur aufweisen, die im Wesentlichen dem Buchstaben "B" entspricht, **dadurch gekennzeichnet, dass** die Außenkontur des Mantelgliedes (4c) zumindest teilweise dieser Kontur angepasst ist, um eine Anlagefläche für eine stoffschlüssige Verbindung an den Durchtrittsstellen (4b, 9a, 9b) bereitzustellen.

2. Verdampfermodul (11) nach Anspruch 1, **dadurch gekennzeichnet, dass** das Düsenglied (4a) mittels eines das Mantelglied (4c) abschließenden Deckelteils (4d) gegenüber dem Mantelglied (4c) gehalten ist.

3. Verdampfermodul (11) nach Anspruch 1 oder 2, **dadurch gekennzeichnet, dass** das Düsenglied (4a) und/oder das Mantelglied (4c) und/oder der Deckelteil (4d) als Umformteil ausgebildet sind.

4. Verdampfermodul (11) nach Anspruch 3, **dadurch gekennzeichnet, dass** das Düsenglied (4a) als Umformteil ausgebildet ist, insbesondere durch Stauchung und/oder Aufweitung aus einem Rohrteil.

5. Verdampfermodul (11) nach Anspruch 3 oder 4, **dadurch gekennzeichnet, dass** das Mantelglied (4c) als Umformteil, insbesondere durch Fließpressen und/oder Aufweitung aus einem Rohrteil, hergestellt ist.

6. Verdampfermodul (11) nach einem der Ansprüche 3 bis 5, **dadurch gekennzeichnet, dass** das Deckelteil (4d) als Umformteil, insbesondere als Stanzteil aus lotplattiertem Blech, hergestellt ist.

7. Verdampfermodul (11) nach einem der vorhergehenden Ansprüche, **dadurch gekennzeichnet, dass** der zweite Eingang (4b) im Mantelglied (4c) angeordnet ist.

8. Verdampfermodul (11) nach einem der vorhergehenden Ansprüche, **dadurch gekennzeichnet, dass** die Länge des Mantelgliedes (4c) im Wesentlichen der Länge der beiden Sammelkästen (5a, 8a) entspricht.

9. Verdampfermodul (11) nach einem der vorhergehenden Ansprüche, **dadurch gekennzeichnet, dass** die beiden Sammelkästen (5a, 8a) stoffschlüssig, insbesondere durch Löten oder Schweißen, mit dem Mantelglied, bevorzugt entlang der gesamten Länge, verbunden sind.

10. Kältemittelkreislauf (1), insbesondere für eine Klimaanlage eines Kraftfahrzeuges, aufweisend zumindest einen Verdichter (2), einen Kondensator (3) und ein Verdampfermodul (11) nach einem der vorhergehenden Ansprüche.

## Claims

1. An evaporator module (11), in particular for a coolant circuit (1) of an HVAC system of a motor vehicle, comprising a first evaporator (5) and at least one second evaporator (8) and an ejector (4) with a nozzle member (4a) and a cladding member (4c), wherein the ejector has a first input (4a) and at least one second input (4b) for feeding coolant, wherein the ejector has a common output (19) for discharging a coolant mixture of the two inputs (4a, 4b), wherein at least some of the coolant discharged from the output (19) can be fed to the first evaporator (5), and wherein the coolant leaving the first evaporator can be fed at least in part to the second input (4b) of the ejector (4), and wherein at least some of the coolant discharged from the output can be fed to the second evaporator (8), wherein a feed (9a, 9b) of the coolant mixture into the first (5) and second evaporator (8) is formed in the cladding member (4c), wherein the first and second evaporator have collecting boxes (5a, 8a) and the coolant mixture is fed into the collecting boxes (5a, 8a), and wherein the collecting boxes (5a, 8a) also have an outer contour that corresponds substantially to the letter "B", **characterised in that** the outer contour of the cladding member (4c) is adapted at least in part to this contour in order to provide a bearing surface for an integrally bonded connection at the points of passage (4b, 9a, 9b).

2. The evaporator module (11) according to claim 1, **characterised in that** the nozzle member (4a) is held with respect to the cladding member (4c) by means of a cover part (4d) that closes off the cladding member (4c).

3. The evaporator module (11) according to claim 1 or 2, **characterised in that** the nozzle member (4a) and/or the cladding member (4c) and/or the cover part (4d) is/are provided as a formed part.

4. The evaporator module (11) according to claim 3, **characterised in that** the nozzle member (4a) is provided as a formed part, in particular by compression and/or expansion from a pipe component.

5. The evaporator module (11) according to claim 3 or 4, **characterised in that** the cladding member (4c) is produced as a formed part, in particular by extrusion and/or expansion from a pipe component.

6. The evaporator module (11) according to one of claims 3 to 5, **characterised in that** the cover part (4d) is produced as a formed part, in particular as a stamping from brazed sheet metal.

7. The evaporator module (11) according to one of the preceding claims, **characterised in that** the second input (4b) is arranged in the cladding member (4c).

8. The evaporator module (11) according to one of the preceding claims, **characterised in that** the length of cladding member (4c) corresponds substantially to the length of the two collecting boxes (5a, 8a).

9. The evaporator module (11) according to one of the preceding claims, **characterised in that** the two collecting boxes (5a, 8a) are integrally bonded to the cladding member, in particular by soldering or welding and preferably along the entire length.

10. A coolant circuit (1), in particular for an HVAC system of a motor vehicle, comprising at least one compressor (2), a condenser (3) and an evaporator module (11) according to one of the preceding claims.

## Revendications

1. Module d'évaporateur (11), en particulier pour un circuit de fluide frigorigène (1) d'un système de climatisation d'un véhicule automobile, présentant un premier évaporateur (5) et au moins un deuxième évaporateur (8), et un éjecteur (4) comprenant un élément formant buse (4a) et un élément formant enveloppe (4c), où l'éjecteur présente une première entrée (4a) et au moins une deuxième entrée (4b) servant à la fourniture de fluide frigorigène, où l'éjecteur présente une sortie commune (19) servant à l'évacuation d'un mélange de fluide frigorigène des deux entrées (4a, 4b), où au moins une partie du fluide frigorigène provenant de la sortie (19) peut être fournie au premier évaporateur (5), et où le fluide frigorigène sortant du premier évaporateur peut être fourni au moins partiellement à la deuxième entrée (4b) de l'éjecteur (4), et où au moins une partie du fluide frigorigène provenant de la sortie peut être fournie au deuxième évaporateur (8), où une alimentation (9a, 9b) en mélange de fluide frigorigène fourni au premier (5) et au deuxième évaporateurs (8) est conçue dans l'élément formant enveloppe (4c), où le premier et le deuxième évaporateurs présentent des bacs collecteurs (5a, 8a), et l'alimentation en mélange de fluide frigorigène se produit dans les bacs collecteurs (5a, 8a), et où les bacs collecteurs (5a, 8a) présentent en outre un contour extérieur qui correspond sensiblement à la lettre "B",
**caractérisé en ce que** le contour extérieur de l'élément formant enveloppe (4c) est adapté au moins partiellement à ce contour des bacs collecteurs, pour fournir une surface d'appui pour un assemblage par continuité de matière au niveau des points de passage (4b, 9a, 9b).

2. Module d'évaporateur (11) selon la revendication 1, **caractérisé en ce que** l'élément formant buse (4a) est maintenu par rapport à l'élément formant enveloppe (4c), au moyen d'une partie formant couvercle (4d) et fermant l'élément formant enveloppe (4c).

3. Module d'évaporateur (11) selon la revendication 1 ou 2, **caractérisé en ce que** l'élément formant buse (4a) et / ou l'élément formant enveloppe (4c) et / ou la partie formant couvercle (4d) sont configurés comme pièce de déformation.

4. Module d'évaporateur (11) selon la revendication 3, **caractérisé en ce que** l'élément formant buse (4a) est configuré comme pièce de déformation, réalisée en particulier par compression et / ou par élargissement à partir d'une pièce tubulaire.

5. Module d'évaporateur (11) selon la revendication 3 ou 4, **caractérisé en ce que** l'élément formant enveloppe (4c) est fabriqué comme pièce de déformation, réalisée en particulier par extrusion et / ou par élargissement à partir d'une pièce tubulaire.

6. Module d'évaporateur (11) selon l'une quelconque des revendications 3 à 5, **caractérisé en ce que** la partie formant couvercle (4d) est fabriquée comme pièce de déformation, réalisée en particulier comme pièce fabriquée à la presse à partir d'une tôle plaquée par brasage.

7. Module d'évaporateur (11) selon l'une quelconque des revendications précédentes, **caractérisé en ce que** la deuxième entrée (4b) est disposée dans l'élément formant enveloppe (4c).

8. Module d'évaporateur (11) selon l'une quelconque des revendications précédentes, **caractérisé en ce que** la longueur de l'élément formant enveloppe (4c) correspond sensiblement à la longueur des deux bacs collecteurs (5a, 8a).

9. Module d'évaporateur (11) selon l'une quelconque des revendications précédentes, **caractérisé en ce que** les deux bacs collecteurs (5a, 8a) sont assemblés par continuité de matière avec l'élément formant enveloppe, de préférence sur la totalité de la longueur, en procédant en particulier par brasage ou par soudage.

10. Circuit de fluide frigorigène (1), en particulier pour un système de climatisation d'un véhicule automobile, présentant au moins un compresseur (2), un condenseur (3) et un module d'évaporateur (11) selon l'une quelconque des revendications précédentes.
